# EUROPEAN PATENT APPLICATION

(11) **EP 1 201 403 A2**
(43) Date of publication of application: **02.05.2002**
(21) Application number: 01308992.5
(22) Date of filing: 23.10.2001
(51) Int. Cl.: B29C 65/34

(54) **Electrofusible units**

(30) Priority: 31.10.2000 GB 0026547
(71) Applicant: Kenworthy, David Michael Anthony, Chesterfield, Derbyshire S41 9QB (GB); Kenworthy, Michael Thornton, Chesterfield, Derbyshire S41 9QB (GB)
(72) Inventor: Kenworthy, David Michael Anthony, Dronfield Woodhouse, Sheffield S18 8XP (GB)
(74) Representative: Houghton, David

(57) **Abstract**

The invention relates to electrofusible units for pipe joints and other purposes able to avoid the employment of jointing equipment such as butt fusion equipment. The objective is met by an electrofusion unit (6) comprising a length of elastomeric material (7) with a winding of electrically conductive wire (8), the length of elastomeric material being notched to ensure that the wire winding is at a required spacing.

## Description

This invention relates to electrofusible units for use in connection with plastics pipes, and other members.

Plastics pipes are used in many applications for the conveyance of fluid and gases and are particularly used in the water and gas markets. Jointing techniques vary from material to material and in many cases the size of the pipe determines the method of jointing.

In the larger sizes of polyethylene pipe, joints are usually either made with rubber ring seals or using what is known as butt fusion techniques. The disadvantages of the former is that a dissimilar material is employed and the joint is not homogeneous, the disadvantage of the latter is that specialist jointing equipment is restrictive when jointing in a trench environment.

When pipes are assembled they comprise of a spigot formed by one end of a pipe, and a socket on the other pipe to receive the spigot. In large diameter pipe the actual variations in sizes from batch to batch (tolerances) can be quite large.

The object of the present invention is to avoid those disadvantages mentioned above and provide a unit capable of serving other purposes.

According to the present invention, an electrofusible unit comprises a length of elastomeric material provided with a winding of electrically conductive wire to serve as a heating coil, the length of elastomeric material being notched to ensure that the wire winding is at a required spacing. The length of elastomeric material may be solid or may be hollow, to suit its intended purpose, and the wire winding may be of coated or uncoated wire.

Preferably the elastomeric material has a polymer base, that includes a percentage of a specified material, such as, for example, polyethylene, to enable the electrofusible unit to weld effectively to a plastics material compatible with the specified material, eg a polyethylene pipe or fitting. Desirably, the percentage of specified material is from 20% to 85% by weight.

The electrofusible unit has the ability to serve a number of different purposes. When formed as a hollow extrusion, it can be cut to a length to suit large diameter pipes. It may be positioned in a recess in the socket of one pipe, to be contacted and compressed by the end of a second pipe inserted into the socket.

The application of electrical power to the winding causes the outer surface of the electrofusible unit, the wall of the recess in the socket and the wall of the pipe end to melt and fuse together, to form a most effective joint. By employing a thermoplastic elastomer core the unit itself will provide the adjustments to cater for tolerances and together with the winding of an electrical element onto the unit provision is made to create a fused joint. The wires can be either plain metal eg copper or copper coated with a polymeric material. These wires are wound onto the core which is provided with grooved facilities to create spacing for the wire which allows for optimisation of the heating. The wire has in this case to be fully annealed in order that it can locate on the core, it does not need to be under tension. Application of power to the wire element generates heat which is sufficient to melt the thermoplastic elastomer unit together with the plastic pipe/fitting. Melt expansion due to heating of the core and the pipe/fitting results in polymer flow between the core and the pipe/fitting which upon resultant cooling has the effect of producing an homogenous joint.

As a joint forming member, the electrofusible unit of the invention has numerous advantages. It can easily be extruded and cut to required lengths and by notching the edges of the extrusion, the wire winding can be of any required spacing. The employment of the electrofusible unit allows the pipe joint to be made, and the pipe lengths adjusted as to their alignment, before electrofusion takes place. Prior to electrofusion, and being tubular, the electrofusible material, when positioned in the recess in the socket of one pipe, being compressible, is compressed by the inserted pipe end, and readily accommodates deviates from nominal pipe and socket diameters, and combats pipe and socket faults such as ovalities.

Once electrofusion has taken place, substantial homogeneity of the joint can substantially be guaranteed, and by being tubular, the resultant joint has a flexibility that permits a degree of pipe movement whilst maintaining the integrity of the joint.

The electrofusible unit of the invention, in addition to its ability to form a joint at a spigot to socket pipe connection, may also serve as an expansion member. With conventional jointing of large diameter pipes there is extensive reliance on the provision of elastomeric sealing rings, that can become dislodged or damaged during installation. This is known to be overcome by employing a relatively conventional electrofusion sleeve to overlie a pipe end inserted into a socket, and positioning an expansion fitting in a recess in the socket to overlie the electrofusion sleeve, the proposition being that heat from the electrofusion sleeve causes the expansion fitting to expand and take up any residual gaps that might be left by an electrofusion sleeve if used alone.

The electrofusible unit of the invention is an ideal substitute for such expansion fittings. In the form of a solid extrusion cut to the required length and located in the recess in the socket, the supply of power to the unit, simultaneously with the supply of power to the sleeve introduces a guarantee that there will be an expansion or melting of the unit to fill all residual gaps.

Beyond its use in pipe connections, the unit of the invention has other significant uses. There are numerous circumstances where a plastics member needs to be secured in an effective manner to another plastics body. Thus, for example with flotation member to support the nets of fish cages, that are formed from butt welded pipe sections, collars are required to be positioned on the flotation member, the collars being loose, and ordinarily held in place by wedges that are easily dislodged and lost. The electrofusible unit of the invention can be extruded in solid form, cut to a relatively short length, and applied to the flotation member at the required position of a collar. By employing an appropriate pressing tool, at the onset of power supplied to the winding, the length of electrofusible unit can be welded to the flotation member to serve as a stop member to prevent lateral movement of loose collar.

In the transport of long lengths of plastics pipe, it is ordinarily so that it is flattened, to facilitate its winding on to a transport spool, and in the circumstance where the pipe is to serve as a lining for an existing cast iron sewer pipe, it is usual to bend the flattened pipe into a generally U-shaped transverse configuration, to ease the task of inserting the pipe down the existing sewer. It is important to prevent the ingress of foreign bodies into the pipe, but its flattening and transverse bending has, hitherto, caused considerable difficulties in providing an effective closure at the ends of the pipe length.

Here, the electrofusible unit can be extruded in solid form and cut to a length to suit the major axis of the flattened pipe. The length of unit is inserted into the pipe end to serve as a plug, and in the application of electrical power is electrofused in position. Being of an elastomeric material the unit has the same bending characteristics as the flattened pipe and the pipe bent to U-shape can be inserted down an existing cast iron sewer pipe with the guarantee that there will be no ingress of material into the pipe. Once the selected length of sewer has been lined, the plugged end can be severed and the pipe expanded to form the lining, and make the end ready for connection to the lining of the next sewer length.

There is an emerging problem with metal upright structures such as for example metal lampposts, were their frequent use by dogs for urination is causing major corrosion problems and a growing need for their replacement.

Additionally, there is the frequent use of an encircling defence against damage of such as saplings and small trees.

Here, the electrofusible element can be of a length and of a major axis to suit its location between faces of a split boot of an appropriate elastomeric material. The material of the boot can be of a sufficient resilience to allow it to be preformed with a single split, and openable to allow it to be located around a metal lamppost or around a sapling or small tree. Equally, the boot can be formed of a more rigid material, and formed in two halves, with an electrofusible element positioned between respective abutting faces of the boot halves.

Preferably, the electrofusible element sits in an appropriate preformed recess in the or each pair of abutting faces of the boot, to ensure one or two homogeneous joints.

There is thereby provided a substantial defence against corrosion problems of metal posts, such as lampposts, and a substantial defence against there being damages to the bases of saplings or small trees.

Several embodiments of the invention are illustrated in the accompanying drawings in which:
Figure 1 is a schematic sectional view of part of a spigot and socket joint fitted with an electrofusible unit according to the invention;
Figure 2 is a perspective view of the electrofusible unit of Figure 1;
Figure 3 is an enlarged view of part of the unit of Figure 2;
Figure 4 is a perspective view of an electrofusible unit of the invention used as a plug for a flattened pipe;
Figure 5 is a perspective view of a part of a flotation collar with an electrofusible unit of the invention serving as a stop member;
Figure 6 is an enlarged view of part of Figure 5; and
Figure 7 is a perspective view of a protective sleeve for the base of an upright member prior to the connection of the two halves by electrofusion.

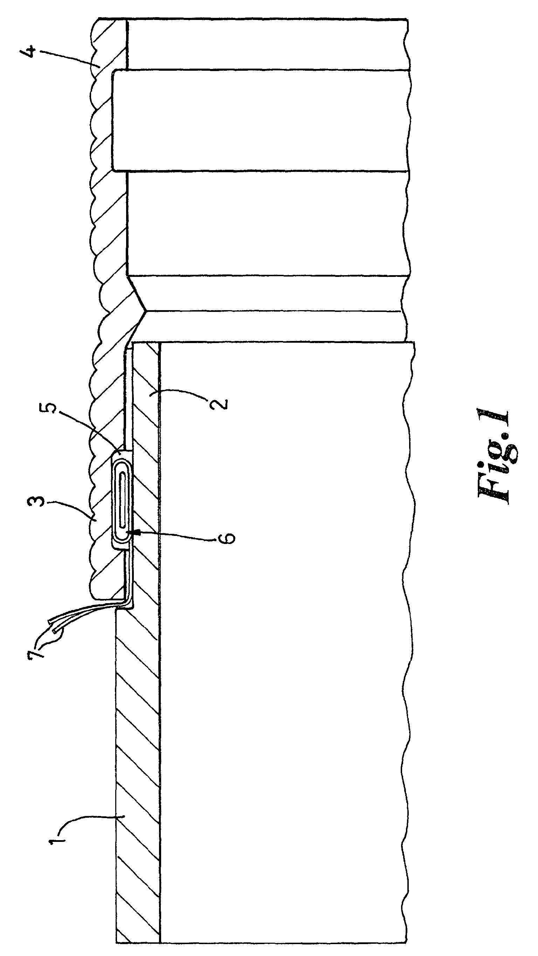

In Figure 1, a pipe 1 has a spigot 2 fitting in a socket 3 of a pipe 4. Located in a recess 5 in the inner wall of the socket 3 and lying against the outer surface of the spigot 2 is an electrofusible unit 6 with leads 7 to extend to a source of electrical power.

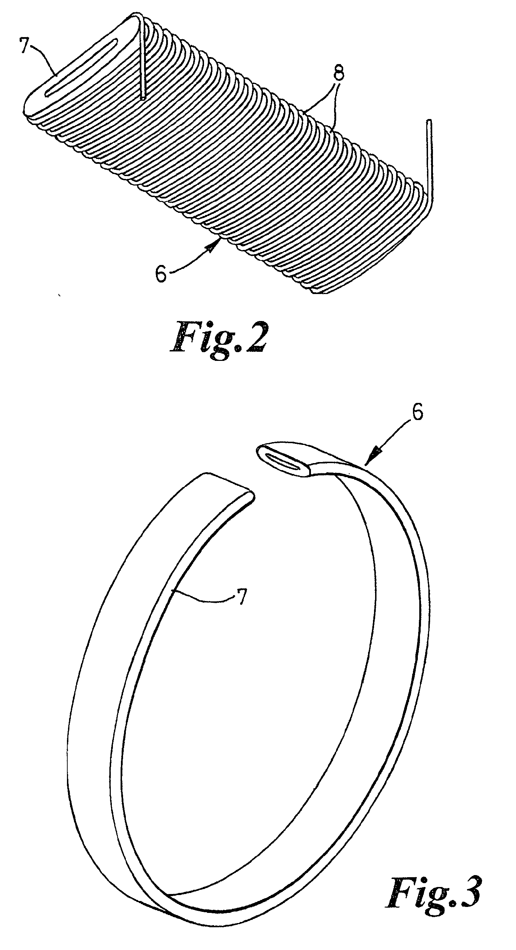

As is illustrated by figure 2 and 3 the electrofusible unit 6 is formed as a split ring 7 of elastomeric material with a wire winding 8. The elastomeric material may be solid, or hollow as shown.

The elastomeric material has a polymer base, and a predetermined content of a specified material to suit the material of the pipes. Thus, for polyethylene pipes, the specified material would be polyethylene.

With the split ring positioned between the spigot and socket as illustrated in Figure 1, power supplied to the winding causes the outer surface at least of the split ring to meet, along with the inner surface of the recess 5 and the outer surface of the spigot 2, whereby to generate an effective seal between the spigot and socket.

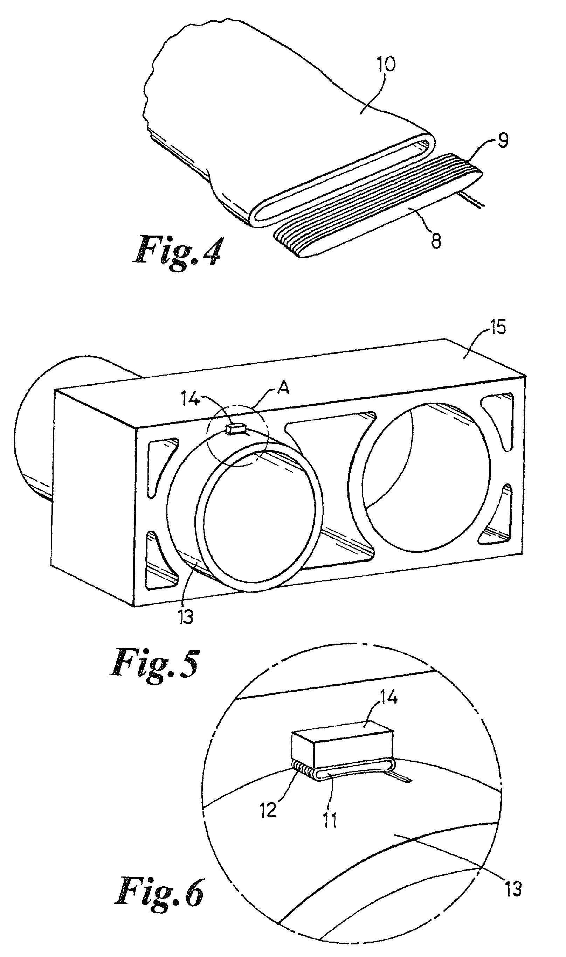

In addition to its ability to form an effective joint between a spigot and socket, the electrofusible unit may also serve as a stop member or plug for the flattened end of a plastics pipe. Thus, as is shown in Figure 4, a short length 8 of solid elastomeric material with its winding 9 of wire forms a unit that can be inserted into the flattened end 5 of a plastics pipe of compatible material. With power supplied to the unit 8, melting of its surface and melting of the inner surface of the flattened length 10 of pipe results in an effective sealing of the pipe end to prevent ingress of foreign matter during transport and storage of the pipe lengths.

In such contexts as fish farming cages, and in other contexts, there is a need to position plastics bodies or plastics pipes or rods. Thus, as is shown in Figures 5 and 6, an electrofusible unit 11 in the form of a short solid length of elastomeric material with a wire winding 12 can be strategically located on the surface of a pipe 13, and a stop block 14, the pipe and the block being of compatible material. With power supplied to the winding, melting of the surface of the unit 11, of the surface of the pipe below the unit, and the lower surface of the stop or block 14 occurs, to secure effectively the stop or block to the pipe and locate a plastics body 15 in place.

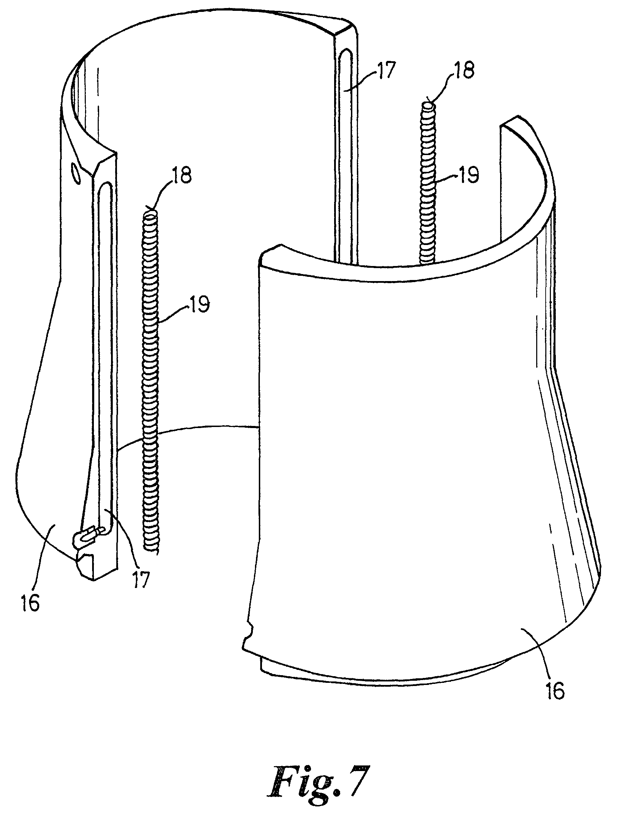

As is mentioned above, there is an advantage in providing a plastics cladding to surround and defend upright metal structures such as lamp posts, and such as saplings and small trees. Thus, as is shown by Figure 7, a split boot 16 is provided that could have a single split if sufficiently flexible, but which is preferably in two halves as shown. In the abutting faces of the boot halves are co-operating recesses 17, in which are located electrofusible units in the form of rods 18 of elastomeric material of a diameter to suit the recesses, each with a winding 19 of wire. Thus, with the boot halves positioned to either side of an upright member, and brought together, the elastomeric unit is trapped in the co-operating recesses, and with power supplied to the windings the surface of the rod is melted along with the surfaces of the recesses, with the result that the boot halves are effectively secured.

## Claims

1. An electrofusible unit charactersised by a length of elastomeric material (6) provided with a winding (8) of electrically conductive wire to serve as a heating core, the length of elastomeric material being notched to ensure that the wire is at a required spacing.

2. An electrofusible unit as in Claim 1, **characterised in that** the length of elastomeric material (6) is hollow.

3. An electrofusible unit as in Claim 1 **characterised in that** the length of elastomeric material (6) is solid.

4. An electrofusible unit as in any of Claims 1 to 3, **characterised in that** the wire (8) is plain metal coated with a polymeric material.

5. An electrofusible unit as in any of Claims 1 to 4, **characterised in that** the wire (8) is uncoated.

6. An electrofusible unit as in any of Claims 1 to 5, **characterised in that** the elastomeric material has a polymer base together with a percentage of a material compatible with the material that the electrofusible unit is to weld.

7. An electrofusible unit as in Claim 6, **characterised in that** the percentage of compatible material is 20% to 85% by weight.

8. A plastics pipe spigot and socket connection comprising an electrofusion unit as in Claim 1, **characterised in that** it is cut to length, located in a recess (5) in the inner wall of a pipe socket (3) and compressed by a pipe end (2) inserted into the socket, whereby to produce, after electrofusion has taken place, a joint with substantial homogeneity and residual flexibility.

9. An expansion fitting for use in joints for large diameter pipes, **characterised by** an electrofusible unit as in Claim 1 located in a recess (5) in a socket of one pipe into which is inserted the end (2) of an adjacent pipe, and fused in place.

10. A stop member for the location of a fitting on a pipe, **characterised by** a predetermined length (11) of electrofusible unit as in Claim 1, located between a pipe (13) and a stop member (14) of compatible plastics material.

11. A plug member for a flattened pipe end **characterised by** a predetermined length (8) of solid electrofusible unit as in Claim 1 inserted into the end (10) of the pipe and fused in place.

12. A split boot for the protection of upright members **characterised by** at least one length of electrofusible unit (18, 19) as in Claim 1, of solid circular section, to locate in co-operating recesses (17) in the abutting edges of the split boot, whereby to produce, when electrofusion has taken place, a solid boot.
